# EUROPEAN PATENT APPLICATION

(11) **EP 3 319 329 A1**
(43) Date of publication of application: **09.05.2018**
(21) Application number: 16846861.9
(22) Date of filing: 13.09.2016
(51) Int. Cl.: H04N 21/482, H04N 21/422, H04N 21/472

(54) **ELECTRONIC DEVICE AND ELECTRONIC DEVICE OPERATION METHOD**

(30) Priority: 15.09.2015 CN 201510586650
(71) Applicant: Samsung Electronics Co., Ltd., Suwon-si, Gyeonggi-do 16677 (KR)
(72) Inventor: MA, Cong, Nanjing Jiangsu 210012 (CN); WANG, Feng, Nanjing Jiangsu 210012 (CN); CHEN, Jie, Nanjing Jiangsu 210012 (CN); JI, Bing, Nanjing Jiangsu 210012 (CN)
(74) Representative: Appleyard Lees IP LLP
(86) International application number: PCT/KR2016/010318
(87) International publication number: WO 2017/048040

(57) **Abstract**

A method of operating an electronic apparatus includes displaying, on a display, a virtual channel list including at least one virtual channel; and in response to an external input of selecting one virtual channel from the virtual channel list, reproducing at least one content corresponding to at least one content identifier among a plurality of content identifiers included in a content list corresponding to the selected virtual channel. In the method, a type of at least one content among a plurality of contents corresponding to the plurality of content identifiers is different from a type of at least one content among the rest of the plurality of contents.

## Description

### TECHNICAL FIELD

The present disclosure relates to an electronic apparatus and a method of operating the electronic apparatus, and more particularly, to reproduction of a virtual channel.

### BACKGROUND ART

Display apparatuses have a function of displaying an image to be viewed by a user. A display apparatus according to the related art includes a display capable of reproducing an image or sound and is controlled in response to a signal transmitted by a controller.

An electronic apparatus according to the related art executes a game application while reproducing a broadcast program of a previous channel, by sequentially receiving, on a display, inputs of moving to an application panel, moving from the application panel to a game application panel, and selecting and executing a desired game application on the game application panel.

Furthermore, in the electronic apparatus according to the related art, content may be selected and reproduced among different types of content, only when a command to move to a content panel of a different type is first received and then an input of selecting the content in the panel is received.

As such, according to the electronic apparatus according to the related art, a desired service may be provided to a user by inconveniently having to perform complex operations.

### DETAILED DESCRIPTION OF THE INVENTION

### TECHNICAL PROBLEM

The present disclosure provides an electronic apparatus which may reproduce different types of content on one channel and may easily change content being reproduced, on a display, and a method of operating the electronic apparatus.

### TECHNICAL SOLUTION

According to an aspect of the present disclosure, there is provided a method of operating an electronic apparatus includes displaying, on a display, a virtual channel list including at least one virtual channel; and in response to an external input of selecting one virtual channel from the virtual channel list, reproducing at least one content corresponding to at least one content identifier among a plurality of content identifiers included in a content list corresponding to the selected virtual channel, in which a type of at least one content among a plurality of contents corresponding to the plurality of content identifiers is different from a type of at least one content among the rest of the plurality of contents.

### DESCRIPTION OF THE DRAWINGS

FIGS. 1A and 1B are reference views for explaining a concept related to a virtual channel, according to an embodiment of the present disclosure.
FIG. 2 is a flowchart showing a process of a method of reproducing content in response to an external input, which is performed by an electronic apparatus, according to an embodiment of the present disclosure.
FIG. 3 is a flowchart showing a process of a method of reproducing content at a certain position in a content list, which is performed by the electronic apparatus, according to an embodiment of the present disclosure.
FIG. 4 is a flowchart showing a process of a method of reproducing content determined based on a current start in the content list, which is performed by the electronic apparatus, according to an embodiment of the present disclosure.
FIG. 5 is a flowchart showing a process of a method of reproducing content selected by the external input from the content list, which is performed by the electronic apparatus, according to an embodiment of the present disclosure.
FIG. 6 is a flowchart showing a process of a method of reproducing an application, which is performed by the electronic apparatus, according to an embodiment of the present disclosure.
FIGS. 7A to 7C are reference views for explaining a method of creating a user customized virtual channel in the electronic apparatus, according to an embodiment of the present disclosure.
FIG. 8 is a reference view for explaining a method of changing content being reproduced during reproduction of virtual channel content, according to an embodiment of the present disclosure.
FIG. 9 is a block diagram of a configuration of the electronic apparatus according to an embodiment.
FIG. 10 is a block diagram of a configuration of the electronic apparatus according to another embodiment.

### BEST MODE

According to an aspect of the present disclosure, there is provided a method of operating an electronic apparatus including displaying, on a display, a virtual channel list including at least one virtual channel; and in response to an external input of selecting one virtual channel from the virtual channel list, reproducing at least one content corresponding to at least one content identifier among a plurality of content identifiers included in a content list corresponding to the selected virtual channel, in which a type of at least one content among a plurality of contents corresponding to the plurality of content identifiers is different from a type of at least one content among the rest of the plurality of contents.

Furthermore, the type of the content may include at least one of a live content broadcasted in real time, service content provided independent of time, and an application.

Furthermore, according to another aspect of the present disclosure, there is provided an electronic apparatus including a display; and a processor configured to display, on the display, a virtual channel list including at least one virtual channel, and in response to an external input of selecting one virtual channel from the virtual channel list, to reproduce at least one content corresponding to at least one content identifier among a plurality of content identifiers included in a content list corresponding to the selected virtual channel, wherein a type of at least one content among a plurality of contents corresponding to the plurality of content identifiers is different from a type of at least one content among the rest of the plurality of contents.

Furthermore, the processor may reproduce content corresponding to a content identifier at a position in the content list.

Furthermore, the processor may reproduce content determined based on a current time among the plurality of content identifiers included in the content list.

Furthermore, the processor may display, on the display, the content list corresponding to the at least one virtual channel, and in response to an external input of selecting a content identifier from a plurality of content identifiers included in the content list, reproduce, on the display, content corresponding to a selected content identifier.

Furthermore, the processor may execute an application on the display, and terminate the execution of the application when no external input is detected for a preset time period.

Furthermore, according to another aspect of the present disclosure, there is provided a non-transitory computer readable recording medium having recorded thereon a program for executing the above method.

### MODE OF THE INVENTION

Embodiments of the present disclosure will now be described more fully with reference to the accompanying drawings.

Various embodiments of the present disclosure are described in detail with reference to the accompanying drawings. However, the present disclosure is not limited thereto and it will be understood that various changes in form and details may be made therein without departing from the spirit and scope of the following claims. That is, descriptions on particular structures or functions may be presented merely for explaining embodiments of the present disclosure. Throughout the drawings, like reference numerals denote like elements.

Terms such as "include" or "comprise" may not be construed to necessarily include any and all constituent elements or steps disclosed in the specification, but may be construed to exclude some of the constituent elements or steps or further include additional constituent elements or steps. Furthermore, the terms such as "include" or "comprise" may be construed to denote a certain characteristic, number, step, operation, constituent element, or a combination thereof, but may not be construed to exclude the existence of or a possibility of addition of one or more other characteristics, numbers, steps, operations, constituent elements, or combinations thereof.

As used herein, the term "and/or" includes any and all combinations of one or more of the associated listed items. In the present specification, the expression such as "A or B" may include at least one A, at least one B, or both of at least one A and at least one B.

Terms such as "first" and "second" are used herein merely to describe a variety of constituent elements, but the constituent elements are not limited by the terms. Such terms are used only for the purpose of distinguishing one constituent element from another constituent element. For example, without departing from the right scope of the present disclosure, a first constituent element may be referred to as a second constituent element, and vice versa.

In the present specification, when a constituent element "connects" or is "connected" to another constituent element, the constituent element contacts or is connected to the other constituent element directly or through at least one of other constituent elements. Conversely, when a constituent element is described to "directly connect" or to be "directly connected" to another constituent element, the constituent element should be construed to be directly connected to another constituent element without any other constituent element interposed therebetween.

Terms used in the present specification are used for explaining a specific embodiment, not for limiting the present disclosure. Thus, an expression used in a singular form in the present specification also includes the expression in its plural form unless clearly specified otherwise in context.

Unless defined otherwise, all terms used herein including technical or scientific terms have the same meanings as those generally understood by those of ordinary skill in the art to which the present disclosure may pertain. The terms as those defined in generally used dictionaries are construed to have meanings matching that in the context of related technology and, unless clearly defined otherwise, are not construed to be ideally or excessively formal.

Hereinafter, an electronic apparatus 1000 and a method of operating the electronic apparatus 1000, according to various embodiments are described with reference to the accompanying drawings. The term "user" used in various embodiments may denote a person using an electronic apparatus or an apparatus using an electronic apparatus (For example, an artificial intelligent electronic apparatus).

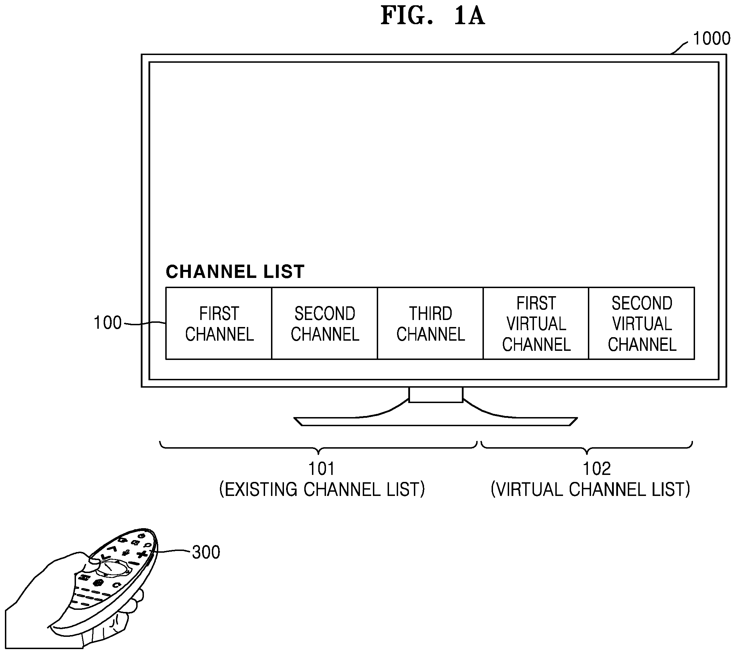

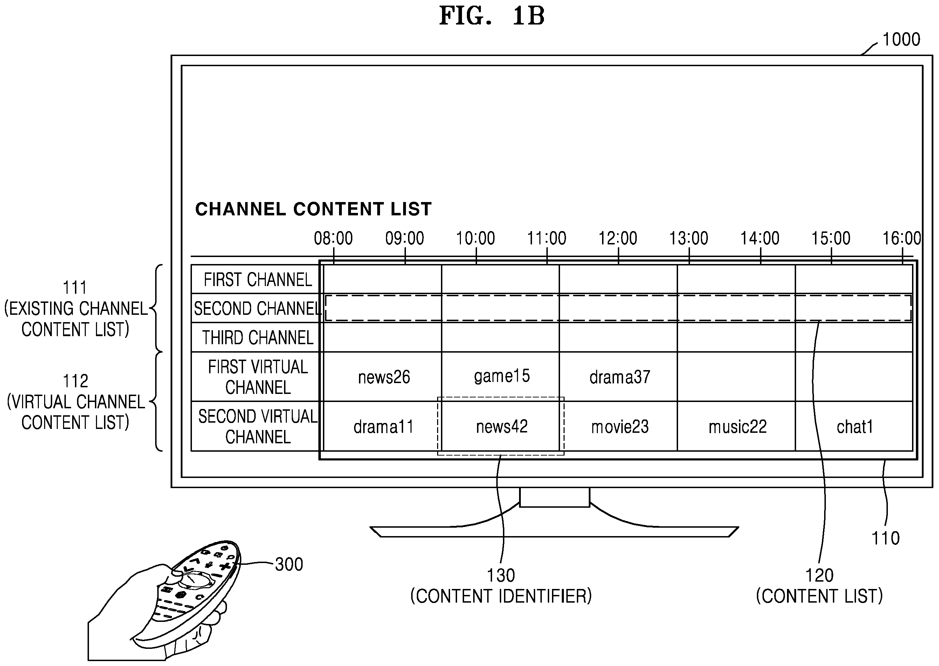

FIGS. 1A and 1B are reference views for explaining a concept related to a virtual channel, according to an embodiment of the present disclosure.

Referring to FIG. 1A, the electronic apparatus 1000 according to an embodiment of the present disclosure may provide, on a display, a channel list 100 that includes an existing channel list 101 containing existing channels and a virtual channel list 102 containing virtual channels.

The existing channel list 101 and the virtual channel list 102 may be displayed on the display separately or altogether according to an external input. At least one of the channel lists 100 to 102 may be displayed in a part of an upper or lower side of, or in a part of a left or right side of the display. However, the display of at least one of the channel lists 100 to 102 is not limited thereto, and thus at least one of the channel lists 100 to 102 may be displayed in various ways according to a configuration, a position, and a size that are previously stored in the electronic apparatus 1000, or according to a configuration, a position, and a size that are preset.

Referring to FIG. 1A, the existing channel list 101 may be defined to be a list containing at least one existing channels. The existing channel may signify a channel reproduced on the display as the electronic apparatus 1000 receives a signal including information about at least one live content broadcasted in real time according to a broadcast schedule preset by a broadcasting company.

The virtual channel list 102 may be defined to be a list containing at least one virtual channel. The virtual channel, unlike the existing channels, may signify a channel created by an external input by a user or electronic apparatus, or a channel created by broadcast companies, productions, or content providers.

Referring to FIG. 1B, the electronic apparatus 1000 may provide a content list 120 corresponding to each of the existing channels or each of the virtual channels included in the channel list 100. The content list 120 may include a content identifier 130 corresponding to at least one content included in a corresponding channel.

An existing channel content list 111 may include at least one live content list corresponding to each of the at least one existing channel contained in the existing channel list 101. A virtual channel content list 112 may include at least one content list corresponding to each of the at least one virtual channel contained in the virtual channel list 102.

The existing channel content list 111 and the virtual channel content list 112 may also be displayed on the display separately or altogether, according to an external input. At least one of the content lists 110 to 112 may be displayed in a part of the upper or lower side of, or a part of the left or right side of the display. However, the display of at least one of the content lists 110 to 112 is not limited thereto, and the at least one of the content lists 110 to 112 may be displayed in various ways according to a configuration, a position, and a size that are previously stored in the electronic apparatus 1000, or according to a configuration, a position, and a size that are preset.

Each content list may include the content identifier 130 corresponding to at least one content included in a corresponding channel. For example, referring to FIG. 1B, a content list corresponding to a second virtual channel may include, as the content identifier 130, "drama 11", "news 42", "movie 23", "music 22", and "chat 1".

The content identifier 130 may indicate a name, an ID (For example, a number "1"), a type, a classification code, etc. of a corresponding content. For example, the content identifier 130 of "news 42" is a content identifier corresponding to a news content that is preset to have a reproduction time on the second virtual channel. The content identifier 130 may express an intrinsic name or ID not only by using characters, but also by using numbers, signs, icons, photos, or 3D images.

In an embodiment, content may include at least one of live content broadcasted in real time, service content provided independent of time, and an application. Accordingly, the content list of the virtual channel may include at least one of a live content identifier, a service content identifier, and an application identifier.

A live content may be defined to be a program broadcasted in real time or according to a broadcast schedule from existing channels. For example, the live content may include a news program broadcasted in real time, a sports program broadcasted in real time, a drama, movie, or entertainment program broadcasted according to a broadcast schedule, etc.

Service content may be defined to be content such as video or audio that is not dependent on time, For example, content that is downloaded or streaming-reproduced from a server, etc., independent of time. For example, the service content may include movie, drama, animation, music video, an entertainment program, or documentary, which may be downloaded from a server, etc.

An application may be defined to be applied software that is executable by the electronic apparatus 1000 without being dependent on time. In an embodiment, the application may be downloaded from the outside. For example, a store, a server, a content provider, etc. Furthermore, the application may signify software that interacts bi-directionally with the outside during execution. For example, the application may include a game application, a chatting application, an education application, or a music application.

The electronic apparatus 1000 may arrange the content identifiers in the content list 120 according to a broadcast schedule time, or arranged the content identifiers according to a reproduction time preset by the electronic apparatus 1000 or a reproduction time preset by a user.

The electronic apparatus 1000 may reproduce content based on a preset condition or an external input. Hereinafter, the meaning of the term "reproduction" in the present specification may include the meanings of "broadcast" of a live content, "replay" of a service content, and "execution" of an application.

When the electronic apparatus 1000 detects a control signal transmitted from a controller 300, the electronic apparatus 1000 may indicate at least one of the channel lists 100 to 102. For example, when the electronic apparatus 1000 detects a control signal generated by pressing a channel list button (hereinafter, referred to as the "CH button") included in the controller 300, a control signal to instruct to display the channel list 100 on the display may be generated. Furthermore, when the electronic apparatus 1000 detects a generated control signal by pressing an existing channel list button (hereinafter, referred to as the "TCH button") or a virtual channel list button (hereinafter, referred to as the "VCH button") included in the controller 300, the existing channel list 101 or the virtual channel list 102 may be displayed on the display. However, the present disclosure is not limited thereto, and when the electronic apparatus 1000 receives various inputs, For example, gesture, voice, or an input using other buttons provided in the controller 300, the electronic apparatus 1000 may display at least one of the channel lists 100 to 102 on the display.

When the electronic apparatus 1000 detects that the control signal transmitted from the controller 300 is maintained over a certain period of time, the electronic apparatus 1000 may display at least one of the content lists 110 to 112. When the electronic apparatus 1000 detects an input of the CH button, the TCH button, or the VCH button of the controller 300 over a critical time, the electronic apparatus 1000 may generate a control signal to instruct at least one of the content lists 110 to 112 to be displayed.

For example, when the electronic apparatus 1000 detects that the control signal generated by pressing the CH button included in the controller 300 is maintained over a critical time, the electronic apparatus 1000 may display a channel content list 110 on the display. Furthermore, when the electronic apparatus 1000 detects that the control signal generated by pressing the TCH button or the VCH button is maintained over a critical time, the electronic apparatus 1000 may display the existing channel content list 111 or the virtual channel content list 112 on the display.

However, the present disclosure is not limited thereto, and when the electronic apparatus 1000 receives various inputs, For example, gesture, voice, or an input using other buttons provided in the controller 300, the electronic apparatus 1000 may display at least one of channel content lists on the display.

While at least one of the channel lists 100 to 102 is displayed on the display, when the electronic apparatus 1000 detects a control signal from the controller 300 to display the same channel list as the channel list being displayed, the electronic apparatus 1000 may stop the display of the channel list on the display. For example, when the channel list 100 is being displayed, in the case that an input signal by pressing the CH button is detected, the electronic apparatus 1000 may terminate the display of the channel list 100 on the display.

While a channel content list is displayed on the display, when the electronic apparatus 1000 detects that a control signal from the controller 300 to display the same channel list as the channel list being displayed is maintained over a critical time, the electronic apparatus 1000 may stop the display of the channel content list on the display.

For example, when the virtual channel content list 112 is displayed, in the case that an input signal by pressing the TCH button over a critical time is detected, the existing channel content list 111 may be displayed together. In contrast, when the virtual channel content list 112 is displayed, in the case that an input signal by pressing the VCH button, not the TCH button, over a critical time is detected, the electronic apparatus 1000 may terminate the display of the virtual channel content list 112.

Hereinafter, in the present specification, the present disclosure is described with reference to the electronic apparatus 1000 according to the embodiment illustrated in FIGS. 1A and 1B.

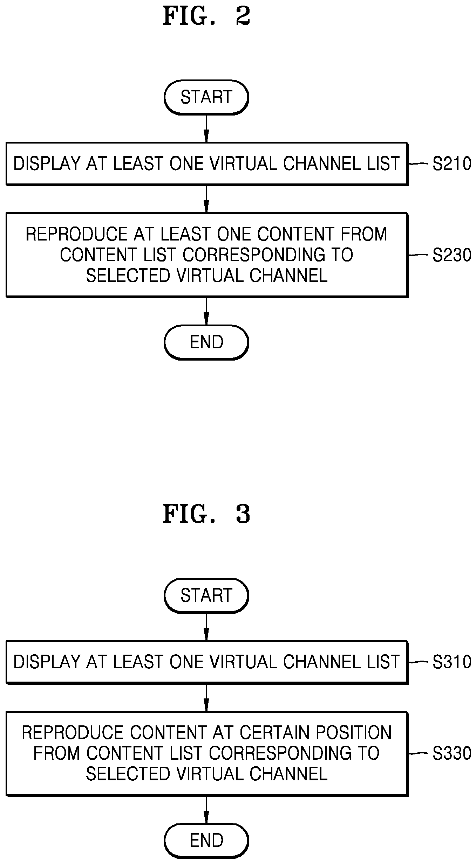

FIG. 2 is a flowchart showing a process of a method of reproducing content in response to an external input, which is performed by the electronic apparatus 1000, according to an embodiment of the present disclosure.

Referring to FIG. 2, in an operation S210, the electronic apparatus 1000 may display, on the display, a virtual channel list including at least one virtual channel. In an embodiment, the electronic apparatus 1000 may display a virtual channel list in response to an external input by a user or an electronic apparatus.

For example, when the electronic apparatus 1000 detects a signal transmitted by the CH button or VCH button included in the controller 300, the electronic apparatus 1000 may display the virtual channel list on the display.

In an operation S230, the electronic apparatus 1000, in response to an external input of selecting one virtual channel from the virtual channel list, may reproduce at least one content corresponding to at least one content identifier among a plurality of content identifiers included in a content list corresponding to the selected virtual channel.

In an embodiment, the electronic apparatus 1000 may receive an external input of selecting one virtual channel from the virtual channel list. The external input of selecting one virtual channel may be a control signal generated by the controller 300. The electronic apparatus 1000 may receive a virtual channel selection control signal generated by pressing a numeric button, a channel change button, a selection button, etc. included in the controller 300.

In an embodiment, the electronic apparatus 1000 may reproduce at least one content corresponding to at least one content identifier among the content identifiers included in a content list corresponding to the selected virtual channel. In this case, the electronic apparatus 1000 may determine whether to reproduce content corresponding to content identified among the content identifiers in various methods.

For example, the electronic apparatus 1000 may reproduce a live content corresponding to the selected virtual channel, in which a broadcast time matches the current time. Furthermore, the electronic apparatus 1000 may reproduce a service content in which a reproduction time preset by the user or the electronic apparatus matches the current time. Furthermore, the electronic apparatus 1000 may reproduce content corresponding to a content identifier recently reproduced from the content list corresponding to the selected virtual channel.

In an operation S230, the type of at least one content of the contents corresponding to the content identifiers may be different from the type of at least one content of the other contents.

For example, the content list may include at least one live content and at least one application, or the content list may include at least one live content and at least one service content.

In an embodiment, the electronic apparatus 1000 may reproduce other content while reproducing at least one content, among the content identifiers included in the content list corresponding to the selected virtual channel.

For example, the electronic apparatus 1000, in respond to an external input of selecting one content identifier from the content list, may reproduce content corresponding to the selected content identifier, or the electronic apparatus 1000 may reproduce content next to the content currently reproduced from the content list when a content change button included in the controller 300 is pressed, or a control signal to select a content change button image displayed on the display.

FIG. 3 is a flowchart showing a process of a method of reproducing content at a certain position in a content list, which is performed by the electronic apparatus 100, according to an embodiment of the present disclosure.

Referring to FIG. 3, in an operation S310, the electronic apparatus 1000 may display, on the display, a virtual channel list including at least one virtual channel. In an embodiment, the operation S310 of FIG. 3 may correspond to the operation S210 of FIG. 2.

In an operation S330, the electronic apparatus 1000, in response to an external input of selecting a virtual channel, may reproduce content corresponding to a content identifier at a certain position from the content list corresponding to the selected virtual channel.

In an embodiment, the electronic apparatus 1000 may reproduce content corresponding to a content identifier located at the first position based on the channel list, from the content list corresponding to the selected virtual channel, or content corresponding to a content identifier located at the last position based on the channel list from the content list.

In another embodiment, a content identifier included in the content list may be a combination of a service content identifier and an application identifier. When service content and an application do not include start time information for reproduction, the electronic apparatus 1000 may reproduce contents in order of content identifiers located in the content list.

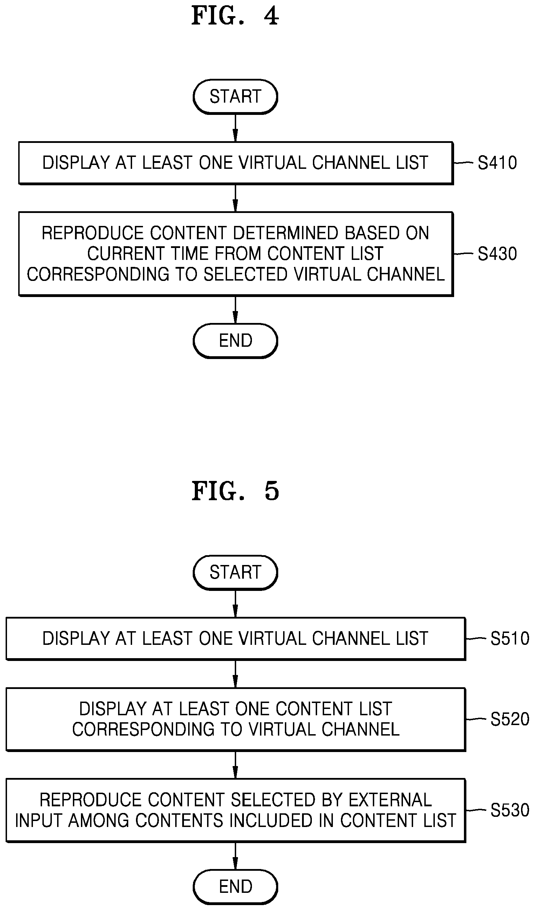

FIG. 4 is a flowchart showing a process of a method of reproducing content determined based on a current start in the content list, which is performed by the electronic apparatus 1000, according to an embodiment of the present disclosure.

Referring to FIG. 4, in an operation S410, the electronic apparatus 1000 may display, on the display, a virtual channel list including at least one virtual channel. In an embodiment, the operation S410 of FIG. 4 may correspond to the operation S210 of FIG. 2.

In an operation S430, the electronic apparatus 1000, in response to an external input of selecting a virtual channel, may reproduce content determined based on the current time, among the content identifiers included in the content list corresponding to the selected virtual channel.

In an embodiment, the electronic apparatus 1000 may reproduce content in which a start time matches the current time, among the content identifiers included in the content list corresponding to the selected virtual channel.

In another embodiment, the electronic apparatus 1000 may reproduce a live content in which the current time is located between a reproduction start time and a reproduction end time.

FIG. 5 is a flowchart showing a process of a method of reproducing content selected by the external input from the content list, which is performed by the electronic apparatus 1000, according to an embodiment of the present disclosure.

Referring to FIG. 5, in an operation S510, the electronic apparatus 1000 may display, on the display, a virtual channel list including at least one virtual channel. In an embodiment, the operation S510 of FIG. 5 may correspond to the operation S210 of FIG. 2.

In an operation S520, the electronic apparatus 1000 may display, on the display, a content list corresponding to at least one virtual channel. In an embodiment, the electronic apparatus 1000, in response to an external input by a user or an electronic apparatus, may display a content list corresponding to the displayed virtual channel.

For example, when the electronic apparatus 1000 detects that a signal transmitted by pressing the CH button or VCH button included in the controller 300 over a certain time, the electronic apparatus 1000 may display a content list on the display. When the electronic apparatus 1000 receives a control signal generated by continuously pressing the CH button or VCH button included in the controller 300 over a critical time, the electronic apparatus 1000 may display a content list corresponding to the virtual channel.

In an operation S530, the electronic apparatus 1000, in response to an external input of selecting one content identifier among the content identifiers included in the content list, may reproduce, on the display, content corresponding to the selected content identifier.

According to an embodiment, the external input of selecting a content identifier from the content list may be a control signal generated by the controller 300. The external input of selecting a content identifier may be generated by pressing the numeric button, the channel change button, the selection button, etc. included in the controller 300. When receiving the external input of selecting a content identifier, the electronic apparatus 1000 may reproduce content corresponding to the selected content identifier from the content list.

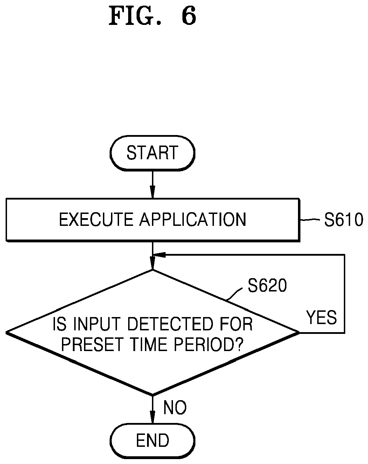

FIG. 6 is a flowchart showing a process of a method of reproducing an application, which is performed by the electronic apparatus 1000, according to an embodiment of the present disclosure. A process of a method of automatically terminating an application by the electronic apparatus 1000 is described below with reference to FIG. 6.

In an operation S610, the electronic apparatus 1000 may execute an application, on the display. In an embodiment, when content to be reproduced is an application, the electronic apparatus 1000 may execute an application on the display.

In an operation S620, when no external input is detected for a preset time period, the electronic apparatus 1000 may terminate the execution of the application.

In an embodiment, the electronic apparatus 1000 may detect an external input regarding the execution of an application. An external input signal may be generated by the controller 300, or by other electronic apparatuses such as smartphones, keypads, touchpads, etc.

In this case, when no external input is detected for a preset time period, the electronic apparatus 1000 may terminate the execution of the application. No detection of an external input for a preset time period may mean that, for the preset time period, the input signal generated by the controller 300 or other electronic apparatuses is not received by the electronic apparatus 1000. As the electronic apparatus 1000 terminates the application being reproduced according to the receiving of an external input, unlimited reproduction of the application may be prevented.

When the preset time period passes without detection of an input signal after the execution of the application, the electronic apparatus 1000 may terminate the application, and reproduce content corresponding to a content identifier located next to the terminated application from the content list.

Furthermore, when the preset time period passes without detection of an input signal after the execution of the application, the electronic apparatus 1000 may terminate the application, and the display may be deactivated or the electronic apparatus 1000 may be turned off.

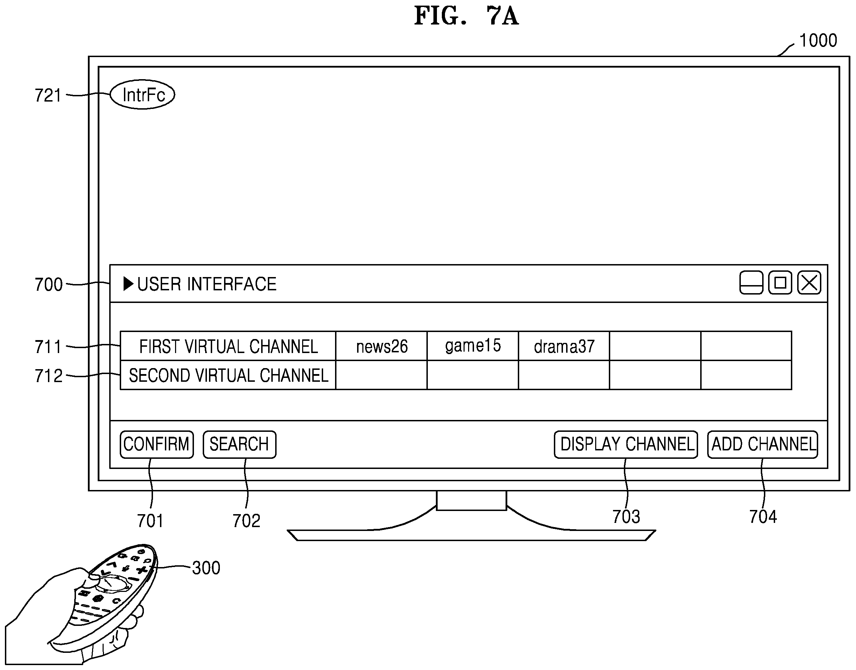

FIGS. 7A to 7C are reference views for explaining a method of creating a user customized virtual channel in the electronic apparatus 1000, according to an embodiment of the present disclosure.

A user customized virtual channel is created on the display of the electronic apparatus 1000 by an external input, and may signify a virtual channel including at least one content identifier. The user customized virtual channel may be created by using a user interface 700, and may include content identifiers corresponding to different types of content.

The electronic apparatus 1000, in response to an external input of creating a virtual channel, may create a user customized virtual channel, or store a created user customized virtual channel or include the created user customized virtual channel in a virtual channel list.

Referring to FIG. 7A, the electronic apparatus 1000 may display the user interface 700 in response to the external input. In an embodiment, the user interface 700 may be used to add a user customized virtual channel, create a user customized virtual channel by inserting content to the added channel, or store a created virtual channel or add the created virtual channel to the virtual channel list.

When a control signal generated by a user interface button (hereinafter, referred to as the "IntrFc button") included in the controller 300 is received or a control signal of selecting an interface button image "IntrFc" 721 displayed on the display is received, the electronic apparatus 1000 may display the user interface 700 on the display.

The user interface 700 may include a previously created user customized virtual channel. For example, when an input of the interface button image "IntrFc" 721 is received, the electronic apparatus 1000 may display the user interface 700, and when an input of a "DISPLAY CHANNEL" button image 703 is received, the a first virtual channel 711 that is a virtual channel that is previously created or externally received may be displayed on the user interface 700. In an embodiment, the first virtual channel 711 may include contents such as "news26", "game15", and "drama37" .

The user interface 700 may include an "ADD CHANNEL" button image 704 to add a virtual channel. When an input of the "ADD CHANNEL" button image 704 is received, the electronic apparatus 1000 may additionally display a user customized virtual channel on the user interface 700 displayed on the display. The added user customized virtual channel may be displayed with the added virtual channel list only on the user interface 700, or displayed together with a content list corresponding to the added virtual channel. The content list may be an empty content list that does not include a single content identifier corresponding to the added user customized virtual channel.

The added user customized virtual channel list or the content list corresponding thereto may be solely displayed on the user interface 700. Alternatively, when the previously created user customized virtual channel is displayed on the user interface 700, the added user customized virtual channel list or the content list corresponding thereto may be displayed above or under the previously created user customized virtual channel.

In an embodiment, when another input of the "ADD CHANNEL" button image 704 is received, the electronic apparatus 1000 may add a second virtual channel 712. The added second virtual channel 712 may be displayed with only a channel list, or together with a content list corresponding thereto. For example, the channel list or the content list corresponding thereto of the added second virtual channel 712 may be displayed under the first virtual channel 711, as illustrated in FIG. 7A.

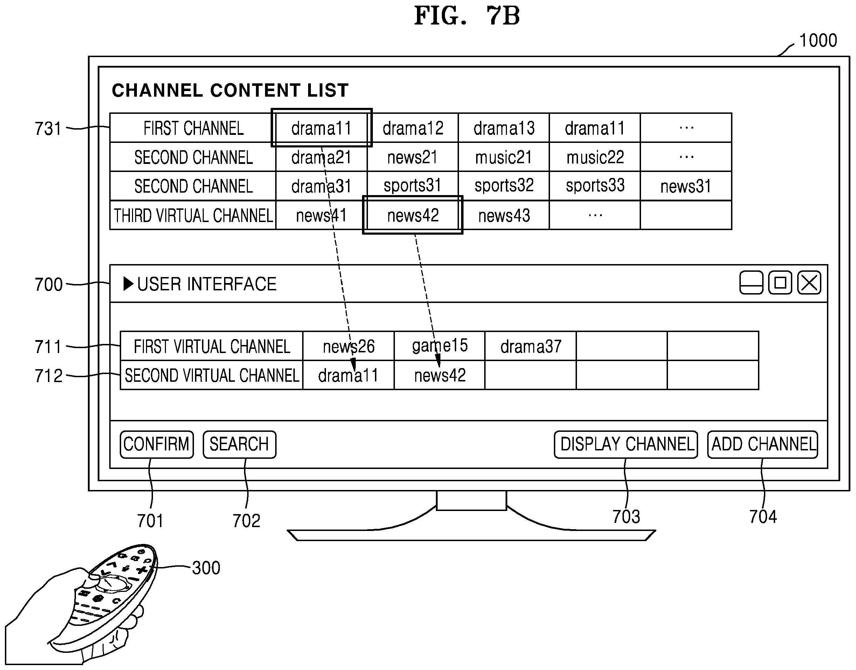

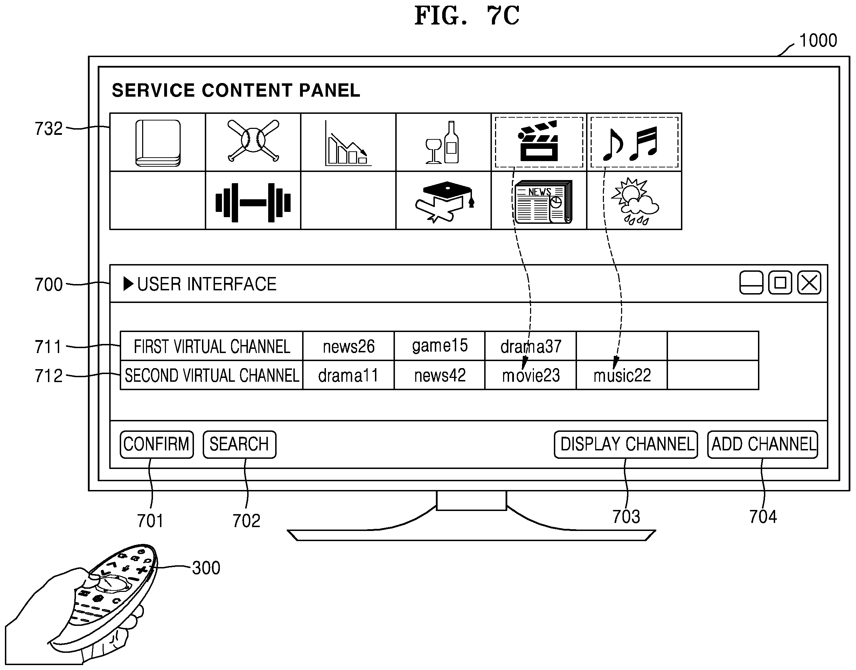

Referring to FIGS. 7B and 7C, the electronic apparatus 1000 may create a user customized virtual channel by inserting a content identifier in the added user customized virtual channel.

The electronic apparatus 1000, in response to an external input of selecting content to be inserted in the content list, may insert an identifier of at least one content in the content list corresponding to the added user customized virtual channel.

In an embodiment, to select content to be inserted in the user customized virtual channel, the electronic apparatus 1000 may provide, on the display, an existing channel list, a virtual channel list, an existing channel content list, a virtual channel content list, a service content panel including a service content, or an application panel including an application.

For example, when an input signal by the TCH button, the VCH button, the CH button, a service content panel button (hereinafter, referred to as the "S-CNT button"), or an application panel button (hereinafter, referred to as the "A-CNT button") of the controller 300 is received, the electronic apparatus 1000 may provide a list or panel corresponding to each input signal, on the display. The electronic apparatus 1000 may display, on the display, a list or panel including a content identifier corresponding to content to be inserted in the added user customized virtual channel.

Furthermore, when an input of selecting a "SEARCH" button image 702 displayed on the user interface 700 is received, the electronic apparatus 1000 may display channel lists, content lists, and content panels on the display,. The electronic apparatus 1000, in response to an input signal of changing a displayed list or panel, may change the displayed list or panel.

The channel lists, content lists, and content panels may include a content identifier indicated by letters, numbers, signs, icons, images, etc. The content identifier may be indicated differently by being switched according to the content panel or content list.

When an input of selecting a content identifier corresponding to content to be inserted from the channel lists, the content lists, or the content panels displayed on the display is received, the electronic apparatus 1000 may insert the selected content identifier in the content list corresponding to the added user customized virtual channel.

The input of selecting a content identifier may be a method of, for example, dragging, double-clicking, or right-clicking the content identifier displayed on the display, but the present disclosure is not limited thereto.

According to an embodiment, as illustrated in FIG. 7B, the electronic apparatus 1000 may create a new virtual channel by inserting a live content of a channel content list 731 in the added second virtual channel 712.

For example, when an input of selecting drama content from a first channel is received, the electronic apparatus 1000 may insert a "drama11" content identifier corresponding to the selected drama content in the second virtual channel 712 at the first position thereof. Furthermore, when an input of selecting a news content of a third virtual channel is received, the electronic apparatus 1000 may insert a "news42" content identifier corresponding to the selected news content in the second virtual channel 712 at the second position thereof.

When the electronic apparatus 1000 inserts a live content in the user customized virtual channel, live contents may be located in the content list according to their respective reproduction times.

According to an embodiment, as illustrated in FIG. 7C, the electronic apparatus 1000 may create a new virtual channel by inserting content of a service content panel 732 in the added second virtual channel 712.

For example, when an input of selecting the movie content of the service content panel 732 is received, the electronic apparatus 1000 may insert a content identifier corresponding to the selected movie content at a third position of the second virtual channel 712. Furthermore, when an input of selecting the music content of the service content panel 732 is received, the electronic apparatus 1000 may insert a content identifier corresponding to the selected music content in a fourth position of the second virtual channel 712.

The electronic apparatus 1000 may move the position of the content identifier inserted in the user customized virtual channel among the inserted content identifiers according to an external input, or may delete the inserted content identifier.

Although it is not illustrated, when the reproduction times of first content previously inserted in the content list corresponding to the user customized virtual channel and second content selected according to the external input are overlapped with each other, the electronic apparatus 1000 may determine to insert an identifier of only one content of the first content and the second content in the content list corresponding to the user customized virtual channel. When the first content is determined to be inserted, the selected second content may not be inserted in the content list. Alternatively, when the second content is determined to be inserted, the electronic apparatus 1000 may delete the previously inserted first content identifier and insert a second content identifier to the content list.

In an embodiment, when a reproduction start time of the second content selected by the external input is within the reproduction time of the first content that is previously inserted in the content list corresponding to the user customized virtual channel, only one content identifier of the first content and the second content may be added to the content list corresponding to the user customized virtual channel.

The content identifier to be inserted of the first content and the second content may be determined based on a preset condition. For example, the content identifier to be inserted may be determined according to the preset priority of content. Alternatively, the electronic apparatus 1000 may add to the content list content that is more frequently reproduced or more recently reproduced of the first content and the second content.

Although it is not illustrated, when an end time of the first content inserted in the content list corresponding to the user customized virtual channel and the reproduction start time of the second content are not continuous, the electronic apparatus 1000 may insert an identifier of third content to allow the first and second contents included in the content list to be continuously reproduced, between the identifier of the first content and the identifier of the second content.

In an embodiment, the identifier of the third content to allow the contents to be continuously reproduced may be determined based on a preset condition. The identifier of the third content may be a content identifier included in the content list corresponding to the user customized virtual channel. Furthermore, the identifier of the third content may be an identifier of content that is more frequently reproduced.

When the identifier of the third content inserted between the identifier of the first content and the identifier of the second content is reproduced, the third content may be reproduced only between the reproduction end time of the first content and the reproduction start time of the second content.

When the creation of the user customized virtual channel is completed and a "CONFIRM" button image 701 of the user interface 700 is selected, the electronic apparatus 1000 may terminate the creation of the user customized virtual channel. The electronic apparatus 1000 may store a created user customized virtual channel or include the created user customized virtual channel in the existing virtual channel list. For example, when an input signal of storing the user customized virtual channel or updating the virtual channel list is received, the electronic apparatus 1000 may store information about the created user customized virtual channel therein or include the information in the existing virtual channel list.

In an embodiment, the electronic apparatus 1000 may edit a previously created user customized virtual channel by using the user interface 700. When an input of the "DISPLAY CHANNEL" button image 703 is received, the electronic apparatus 1000 may display the previously created user customized virtual channel. In the same method described above, the electronic apparatus 1000 may insert a new content in the previously created user customized virtual channel or move or delete the inserted content.

The user customized virtual channel may be differently set according to the user of the electronic apparatus 1000. The user customized virtual channels of a first user and a second user may be separately displayed on a display or an interface, and may be edited only by a corresponding user.

Although it is not illustrated, the electronic apparatus 1000 may receive information about a virtual channel from an external server. In an embodiment, the electronic apparatus 1000 may receive the information about a virtual channel to add from a broadcasting company, a production company, a store, a content provider, etc. The information about a virtual channel may include a virtual channel list, a virtual channel content list, or content.

The received virtual channel list or virtual channel content list may be previously configured according to an arbitrary condition and stored in the server. The arbitrary condition for classifying the contents forming the virtual channel content list may include job, hobby, gender, or age. For example, a virtual channel list or virtual channel content list for housewives may include a "morning news" content, a "today's weather" content, or a "recipe" content. Furthermore, a virtual channel list or virtual channel content list for students may include a "morning English" content, a "today's Chinese" content, or a "Korean history" content.

The virtual channel list or virtual channel content list that is previously configured and stored in the server may be received from the server to the electronic apparatus 1000, in response to an external input. Furthermore, the virtual channel list or virtual channel content list that is previously configured and stored in the server may be received from the server at the request of the electronic apparatus 1000. The electronic apparatus 1000 may display the received virtual channel list or content list on the display, or store the received virtual channel list or content list in the electronic apparatus 1000.

Although it is not illustrated, the content list of the electronic apparatus 1000 may include a first live content identifier provided by a first channel and a second live content identifier provided by a second channel that is different from the first channel. The electronic apparatus 1000 may reproduce contents corresponding to the first live content identifier at the broadcast time of the first live content identifier, and reproduce contents corresponding to the second live content identifier at the broadcast time of the second live content identifier.

In an embodiment, the electronic apparatus 1000 may reproduce a live content included in the content list on a screen of the selected virtual channel, without moving to a corresponding channel at the broadcast time of a broadcast program.

In another embodiment, the content list may include at least one of the service content identifier and the application identifier and a live content identifier provided by a broadcast channel. The electronic apparatus 1000 may reproduce a live content at the broadcast time of the live content, and reproduce at least one of the service content and the application before or after the reproduction of the live content.

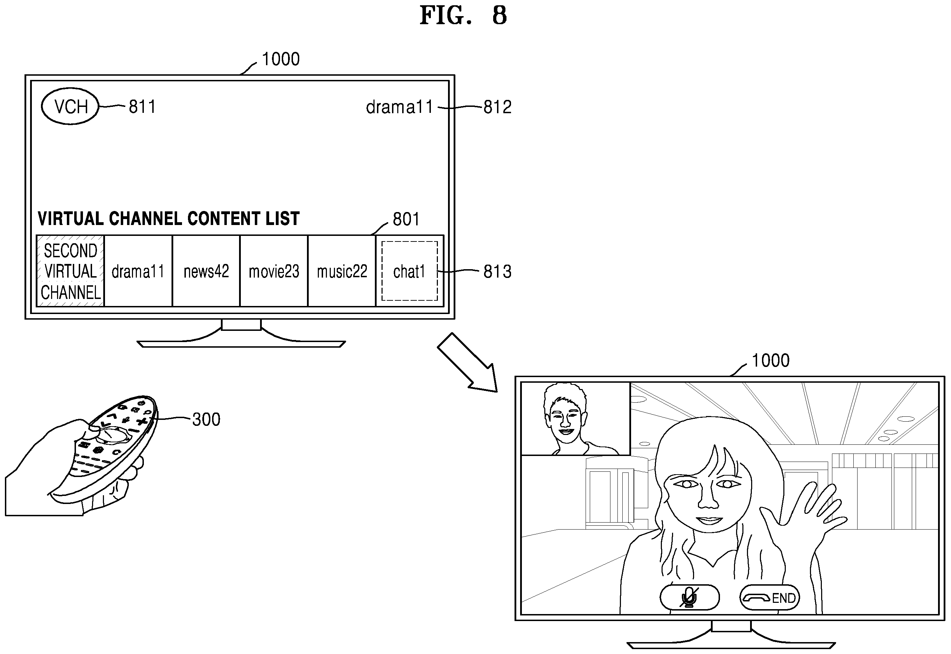

FIG. 8 is a reference view for explaining a method of changing content being reproduced during reproduction of virtual channel content, according to an embodiment of the present disclosure.

The electronic apparatus 1000 may change content being reproduced on a virtual channel including the content being reproduced. For example, the electronic apparatus 1000 may execute a video chatting application corresponding to a "chat1" content identifier 813 while reproducing a drama corresponding to a "drama11" content identifier 812.

First, the content being reproduced by the electronic apparatus 1000 may be content corresponding to a "drama11" content identifier included in the second virtual channel. In this case, a "VCH 2" logo 811 indicating the virtual channel being watched may be displayed at the upper left corner of the display of the electronic apparatus 1000. Furthermore, the "drama11" content identifier 812 indicating the content may be displayed at the upper right corner of the display of the electronic apparatus 1000. However, the indication of an identifier of a virtual channel or content being watched is not limited thereto, and may be displayed in various ways.

In an embodiment, the electronic apparatus 1000, in response to the external input, may change content being reproduced on the display within the same virtual channel. For example, the electronic apparatus 1000, in response to an input by left/right buttons included in the controller 300, may reproduce content located before or after the content identifier being reproduced, from the virtual channel content list.

In another embodiment, the electronic apparatus 1000 may display the content list of the virtual channel including the content being reproduced, and change the content being reproduced, in response to an external input of selecting content to be changed.

For example, when a content list indication signal including the content being reproduced is received through the controller 300, the electronic apparatus 1000 may display a second virtual channel content list 801 including the content being reproduced. Furthermore, when an input of the "VCH 2" logo 811 is received, the electronic apparatus 1000 may display, on the display, the second virtual channel content list 801 corresponding to the "VCH 2" logo 811.

The electronic apparatus 1000, in response to an external input of selecting content to be reproduced from a displayed content list, may change content to be reproduced on the display. For example, when an input of selecting the "chat1" content identifier 813 displayed at a fifth position in the content list is received, the electronic apparatus 1000 may execute a video chatting application corresponding to the "chat1" content identifier 813.

Existing channels of the existing broadcasting companies are provided by an electronic apparatuses that detect signals provided by the broadcasting companies according to the program schedules provided by the broadcasting companies. In contrast, the electronic apparatus 1000 according to the present disclosure may reproduce programs without channel changes by using one virtual channel including various broadcast programs provided by many different broadcasting companies. Furthermore, the electronic apparatus 1000 may reproduce contents without picture changes by using a virtual channel including movies, dramas, games, etc. The electronic apparatus 1000 may change content being reproduced, with an easy picture change, among different types of content.

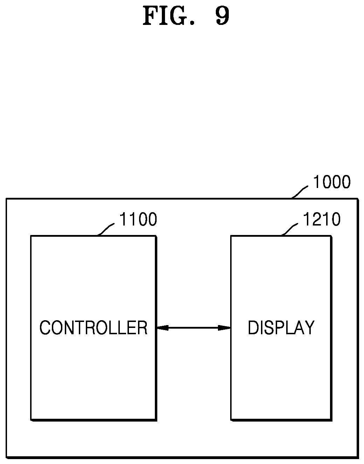

FIG. 9 is a block diagram of a configuration of the electronic apparatus 1000 according to an embodiment.

Referring to FIG. 9, the electronic apparatus 1000 according to an embodiment of the present disclosure may include a display 1210 and a processor 1100. However, the illustrated constituent elements are not all essential constituent elements. The electronic apparatus 1000 may be implemented by more constituent elements than the number of the illustrated constituent elements, or by less constituent elements than the number of the illustrated constituent elements.

Hereinafter, the constituent elements are sequentially described below.

The processor 1100 may include one or more processors to control other constituent elements included in the electronic apparatus 1000.

The processor 1100 may display a virtual channel list including at least one virtual channel. In an embodiment, the processor 1100 may control the display 1210 to display channel lists, content lists, or content panels.

The processor 1100, in response to an external input by a user, the controller 300, or other electronic apparatus, may display a virtual channel list on the display 1210.

Furthermore, the processor 1100, in response to an external input of selecting one virtual channel from the virtual channel list, may control the display 1210 to display at least one content corresponding to at least one content identifier among a plurality of content identifiers included in a content list corresponding to the selected virtual channel.

In this case, the type of at least one content of the contents corresponding to the content identifiers may be different from the type of at least one content of the other contents.

The processor 1100 may reproduce, on the display 1210, content corresponding to a content identifier at a specific position in the content list.

Furthermore, the processor 1100 may reproduce content determined based on a current time among the content identifiers included in the content list.

The processor 1100 may control the display 1210 to display at least one content list corresponding to the virtual channel, and in response to an external input of selecting a content identifier among the content identifiers included in the content list, to display content corresponding to the selected content identifier.

In an embodiment, the processor 1100 may reproduce another content while reproducing at least one content among the content identifiers included in the content list corresponding to the selected virtual channel.

The processor 1100 may execute an application on the display 1210, and may terminate the execution of the application when no external input is detected for a preset time period.

The processor 1100, in response to an external input of creating a virtual channel, may create a user customized virtual channel, store the created user customized virtual channel, or include the created user customized virtual channel in the virtual channel list.

Furthermore, the processor 1100, in response to an external input of selecting content to be inserted in the content list, may insert an identifier of at least one content in a content list corresponding to the user customized virtual channel.

Furthermore, when the end time of the first content inserted in the content list corresponding to the user customized virtual channel and the reproduction start time of the second content are not continuous, the processor 1100 may insert the identifier of the third content to allow the contents included in the content list to be continuously reproduced, between the identifier of the first content and the identifier of the second content.

In an embodiment, the processor 1100, in response to an external input, may control the display 1210 to display the user interface 700. The processor 1100 may add a user customized virtual channel by using the user interface 700, create the user customized virtual channel by inserting content in the added channel, or store the created virtual channel or add the created virtual channel to the virtual channel list.

When the first live content identifier provided by the first channel and the second live content identifier provided by the second channel that is different from the first channel are included in the content list, the processor 1100 may reproduce the first live content at the broadcast time of the first live content, and the second live content at the broadcast time of the second live content.

The display 1210 may display channel lists, content lists, or content panels under the control of the processor 1100. Furthermore, under the control of the processor 1100, the display 1210 may display the user interface 700, button images, a virtual channel logo being reproduced, or a virtual channel identifier being reproduced.

When the display 1210 and a touchpad constitute a touch screen in a layer structure, the display 1210 may be used as an input device in addition to an output device. In an embodiment, the display 1210 may receive an external input of selecting a button image.

The display 1210 may include at least one of a liquid crystal display, a thin film transistor-liquid crystal display, an organic light-emitting diode, a flexible display, a three-dimensional (3D) display, and an electrophoretic display. According to the implementation form of the electronic apparatus 1000, the electronic apparatus 1000 may include two or more displays as the display 1210. The two or more displays 1210 may be arranged to face each other by using a hinder.

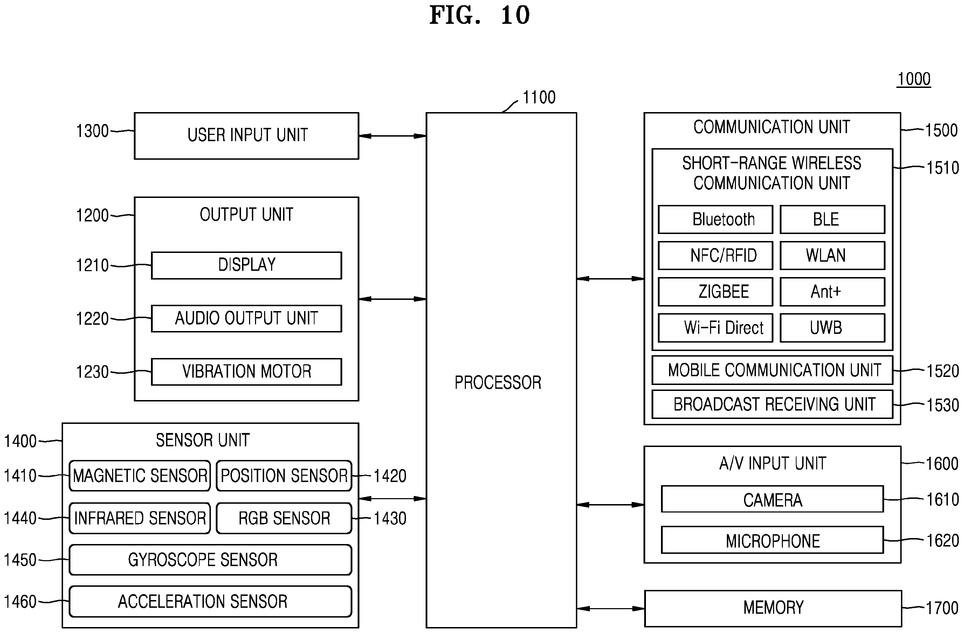

FIG. 10 is a block diagram of a configuration of the electronic apparatus 1000 according to another embodiment.

As illustrated in FIG. 10, the electronic apparatus 1000 may further include, in addition to the processor 1100 and the display 1210, an output unit 1200, a user input unit 1300, a sensing unit 1400, a communication unit 1500, an audio/video (A/V) input unit 1600, and a memory 1700.

The same descriptions about the processor 1100 and the display 1210 presented with reference to FIG. 9 are omitted in the descriptions about the processor 1100 and the display 1210 in FIG. 10.

The user input unit 1300 means a device for externally inputting data to control the electronic apparatus 1000. For example, the user input unit 1300 may include key pads, dome switches, touchpads (a contact capacitive type, a pressure resistive film type, an infrared detection type, a surface acoustic wave type, an integral strain gauge type, a piezoelectric type, etc.), jog wheels, jog switches, etc., but the present disclosure is not limited thereto.

In an embodiment, the user input unit 1300 may signify an external input to select a content identifier or a button image, a logo, etc. on the display 1210. When the user input unit 1300 is configured by a key pad or a dome switch, the external input to select a content identifier, a button image, or a logo may be clicking or pressing a corresponding key at a specific position on the display 1210. Alternatively, when the user input unit 1300 is configured by a touchpad, the external input may be an input of touching a key corresponding to a specific position on the display 1210, but the present disclosure is not limited thereto.

Furthermore, the user input unit 1300 may be the above-described constituent element of the controller 300, or the constituent element of the electronic apparatus 1000.

The output unit 1200 may include an audio output unit 1220 and a vibration motor 1230, in addition to the display 1210.

The audio output unit 1220 outputs audio data received from the communication unit 1500 or stored in the memory 1700. Furthermore, the audio output unit 1220 outputs an audio signal related to a function performed by the electronic apparatus 1000, for example, call signal receiving sound, message receiving sound, or alarm sound. The audio output unit 1220 may include a speaker, a buzzer, etc.

The vibration motor 1230 may output a vibration signal. For example, the vibration motor 1230 may output a vibration signal corresponding to output of audio data or video data, for example, call signal receiving sound, message receiving sound, etc.. Furthermore, when a touch is input on a touch screen, the vibration motor 1230 may output a vibration signal.

The sensing unit 1400 may detect a state of the electronic apparatus 1000 or a state around the electronic apparatus 1000, and transmit detected information to the processor 1100.

The sensing unit 1400 may include at least one of a magnetic sensor 1410, a position sensor 1420, for example, a GPS, an RGB sensor or an illuminance sensor 1430, an infrared sensor 1440, a gyroscope sensor 1450, and an acceleration sensor 1460, but the present disclosure is not limited thereto. Since the functions of the respective sensors can be intuitively guessed from their names by one of ordinary skill in the art to which the present disclosure pertains to, detailed descriptions thereof are omitted.

The communication unit 1500 may include at least one constituent element that enables the electronic apparatus 1000 to communicate with an external device. The communication unit 1500 may further include a short-range wireless communication unit 1510, a mobile communication unit 1520, and a broadcast receiving unit 1530.

The short-range wireless communication unit 1510 may include a Bluetooth communication unit, a Bluetooth low energy (BLE) communication unit, a near field communication unit, a WLAN (WiFi) communication unit, a Zigbee communication unit, an infrared data association (IrDA) communication unit, a Wi-Fi Direct (WFD) communication unit, an ultra wideband (UWB) communication unit, an Ant+ communication unit, etc., but the present disclosure is not limited thereto.

The mobile communication unit 1520 transceives a wireless signal with at least one of a base station, an external terminal, and a server in a mobile communication network. The wireless signal may include various types of data according to transceiving of a voice call signal, a video call signal, or a text/multimedia message.

The broadcast receiving unit 1530 externally receives a broadcast signal and/or information related to broadcast through a broadcast channel. The broadcast channel may include a satellite channel and a terrestrial channel. In some embodiments, the electronic apparatus 1000 may not include the broadcast receiving unit 1530.

In an embodiment, the communication unit 1500 may receive the information about a virtual channel from the server, under the control of the processor 1100. The communication unit 1500 may receive a virtual channel list, a virtual channel content list, or content.

The A/V input unit 1600 is used to input an audio signal or a video signal and may include a camera 1610, a microphone 1620, etc.

The camera 1610 may obtain an image frame such as a still image or a video through an image sensor, in a video call mode or a photographing mode. An image captured by the image sensor may be processed by the processor 1100 or a separate image processor (not shown). For example, the external input received to select a channel, content, or a user customized virtual channel may be received in form of a gesture through the camera 1610.

The microphone 1620 receives an input of an external audio signal and processes the input to output electrical voice data. For example, the microphone 1620 may receive an audio signal from an external device or a speaker. For example, the external input received to select a channel, content, or a user customized virtual channel may be received in form of voice through the microphone 1620.

The memory 1700 may store a program for processing and controlling the processor 1100, or store data that is input to or output from the electronic apparatus 1000.

The memory 1700 may include at least one of storage media of a flash memory type, a hard disk type, a multimedia card micro type, a card type memory, for example, SD or XD memory, random access memory (RAM), static random access memory (SRAM), read-only memory (ROM), electrically erasable programmable read-only memory (EEPROM), programmable read-only memory (PROM), magnetic memory, magnetic disc, and optical disc.

In an embodiment, the memory 1700 may include a module including at least one instruction to control the electronic apparatus 1000 to display, on the display, a virtual channel list including at least one virtual channel, and in response to an external input of selecting one virtual channel from the virtual channel list, to reproduce at least one content from a content list including at least one content identifier corresponding to a selected virtual channel.

Furthermore, the memory 1700 may store information about a virtual channel that is generated or received. The memory 1700 may store information about channel lists, channel content lists, or contents.

The block diagrams of the electronic apparatus 1000 illustrated in FIGS. 9 and 10 are according to an embodiment. The constituent elements of the block diagrams may be integrated, added, or omitted according to the specification of the electronic apparatus 1000 that is actually implemented. In other words, as necessary, two or more constituent elements may be integrated into one constituent element, or one constituent element may be configured with two or more subdivided constituent elements. Furthermore, the function performed by each block is presented for the purpose of explaining the embodiments, and thus the detailed operation or device thereof do not limit the scope of rights according to the present disclosure.

The disclosed embodiments may be embodied in form of a program command executable through various computing devices, and may be recorded on a computer-readable medium. The computer-readable medium may include a program command, a data file, a data structure, etc. solely or by combining the same. A program command recorded on the medium may be specially designed and configured for the present disclosure or may be a usable one, such as computer software, which is well known to one of ordinary skill in the art to which the present disclosure pertains to. A computer-readable recording medium may include magnetic media such as hard discs, floppy discs, and magnetic tapes, optical media such as CD-ROM or DVD, magneto-optical media such as floptical disks, and hardware devices such as ROM, RAM flash memory, which are specially configured to store and execute a program command. An example of a program command may include not only machine codes created by a compiler, but also high-level programming language executable by a computer using an interpreter.

The above descriptions of the present disclosure is for an example, and it will be understood that one of ordinary skill in the art to which the present disclosure pertains can easily modify the present disclosure into other detailed form without changing the technical concept or essential features of the present disclosure. Thus, the above-described embodiments are exemplary in all aspects and should not be for purposes of limitation. For example, each constituent element described to be a single type may be embodied in a distributive manner. Likewise, the constituent elements described to be distributed may be embodied in a combined form.

The scope of the present disclosure is defined not by the detailed description of the disclosure but by the appended claims, and all changes and modifications introduced from the concept and scope of the claims and the equivalent concept thereof will be construed as being included in the present disclosure.

## Claims

1. A method of operating an electronic apparatus, the method comprising:
displaying, on a display, a virtual channel list including at least one virtual channel; and
in response to an external input of selecting one virtual channel from the virtual channel list, reproducing at least one content corresponding to at least one content identifier among a plurality of content identifiers included in a content list corresponding to the selected virtual channel,
wherein a type of at least one content among a plurality of contents corresponding to the plurality of content identifiers is different from a type of at least one content among the rest of the plurality of contents.

2. The method of claim 1, wherein the reproducing of the at least one content comprises reproducing content corresponding to a content identifier at a position in the content list.

3. The method of claim 1, wherein the reproducing of the at least one content comprises reproducing content determined based on a current time among the plurality of content identifiers included in the content list.

4. The method of claim 1, wherein the displaying of the virtual channel list further comprises displaying, on the display, the content list corresponding to the at least one virtual channel, and
the reproducing of the at least one content further comprises
in response to an external input of selecting a content identifier from a plurality of content identifiers included in the content list, reproducing, on the display, content corresponding to a selected content identifier.

5. The method of claim 1, wherein the reproducing of the at least one content comprises:
executing an application on the display; and
terminating the execution of the application when no external input is detected for a preset time period.

6. The method of claim 1, further comprising:
in response to an external input of creating a virtual channel, creating a user customized virtual channel; and
storing the created user customized virtual channel or including the created user customized virtual channel in the virtual channel list.

7. The method of claim 6, wherein the creating of the user customized virtual channel comprises inserting an identifier of at least one content in the content list corresponding to the user customized virtual channel, in response to an external input of selecting content to be inserted in the content list.

8. The method of claim 6, wherein the creating of the user customized virtual channel comprises, when an end time of first content inserted in the content list corresponding to the user customized virtual channel and a reproduction start time of second content are not continuous, inserting an identifier of third content to allow contents included in the content list to be continuously reproduced, between the identifier of the first content and the identifier of the second content.

9. The method of claim 1, wherein the content list comprises a first live content identifier provided by a first channel and a second live content identifier provided by a second channel different from the first channel, and
the reproducing of the at least one content comprises reproducing first live content at a broadcast time of the first live content and second live content at a broadcast time of the second live content.

10. An electronic apparatus comprising:
a display; and
a processor configured to display, on the display, a virtual channel list including at least one virtual channel, and in response to an external input of selecting one virtual channel from the virtual channel list, to reproduce at least one content corresponding to at least one content identifier among a plurality of content identifiers included in a content list corresponding to the selected virtual channel,
wherein a type of at least one content among a plurality of contents corresponding to the plurality of content identifiers is different from a type of at least one content among the rest of the plurality of contents.

11. The electronic apparatus of claim 10, wherein the processor, in response to an external input of creating a virtual channel, creates a user customized virtual channel, and stores the created user customized virtual channel or includes the created user customized virtual channel in the virtual channel list.

12. The electronic apparatus of claim 11, wherein the processor, in response to an external input of selecting content to be inserted in the content list, inserts an identifier of at least one content in the content list corresponding to the user customized virtual channel.

13. The electronic apparatus of claim 11, wherein, when an end time of first content inserted in the content list corresponding to the user customized virtual channel and a reproduction start time of second content are not continuous, an identifier of third content to allow the contents included in the content list to be continuously reproduced is inserted between the identifier of the first content and the identifier of the second content.

14. The electronic apparatus of claim 10, wherein the content list comprises a first live content identifier provided by a first channel, and a second live content identifier provided by a second channel different from the first channel, and
the processor reproduces first live content at a broadcast time of the first live content, and second live content at a broadcast time of the second live content.

15. A non-transitory computer readable recording medium having recorded thereon a program for executing the method of operating an electronic apparatus defined in any of claims 1 to 9.
